# EUROPEAN PATENT SPECIFICATION

(11) **EP 3 139 582 B1**
(45) Date of publication and mention of the grant of the patent: **22.04.2020**
(21) Application number: 16156210.3
(22) Date of filing: 17.02.2016
(51) Int. Cl.: H04N 1/44

(54) **INFORMATION PROCESSING APPARATUS AND METHOD**
INFORMATIONSVERARBEITUNGSVORRICHTUNG UND -VERFAHREN
APPAREIL ET PROCÉDÉ DE TRAITEMENT D'INFORMATIONS

(30) Priority: 04.09.2015 JP 2015174337
(43) Date of publication of application: 08.03.2017
(73) Proprietor: Fuji Xerox Co., Ltd., Minato-ku, Tokyo (JP)
(72) Inventor: MATSUDA, Jiro, Yokohama-shi, Kanagawa (JP); FUSE, Tohru, Yokohama-shi, Kanagawa (JP)
(74) Representative: Haseltine Lake Kempner LLP

(56) References cited:
- WO-A1-2005/050458
- US-A1- 2009 310 179
- US-A1- 2015 031 398
- US-A1- 2015 116 757
- MARTIN AZIZYAN ET AL: "SurroundSense", NATIONAL LAB FOR INFORMATION SCIENCE AND TECHNOLOGY/ MOBICOM'09, ACM, BEIJING,CHINA, 20 September 2009 (2009-09-20), pages 261-272, XP058288613, DOI: 10.1145/1614320.1614350 ISBN: 978-1-60558-702-8

## Description

### BACKGROUND

### Technical Field

The present invention relates to an information processing apparatus and a program.

### Related Art

JP-A-2012-529873 discloses a system that tracks a position of a mobile device, such as a mobile phone, based on communication using electromagnetic waves, and that makes various proposals to the user based on the tracked movement pattern.

JP-A-2014-023119 discloses position information providing device that estimates an installation place of the device using an acceleration sensor, a gyro sensor, or the like when the installation place of the own device is calculated based on a received positioning signal and position information is not included in the received positioning signal.

JP-A-2014-192813 discloses a method for estimating a position of a terminal device based on radio wave intensity received from a wireless access point, even when the terminal device is positioned in an indoor environment.

In general, an authentication process using identification information, a password, or the like is carried out for ensuring security in the authentication of an external device when the information processing device is connected to the external device or when a processing request from the external device is executed by the information processing device.

Further, for more robust security protection, the information processing device may execute only a processing request from an external device installed in a specific area.

However, since the authentication process using identification information, a password, or the like is merely performed, the information processing device executes a processing request from the external device even when the installation place of the external device has moved from the specific area. In such case, it is not possible to realize execution of only a processing request from the external device installed in the specific area.

US 2915/031398 A1 discloses systems and methods of accessing and managing geo-fence zones, wherein digital documents are provided with at least one zone address token for identifying a zone address within the document.

WO 2005/050458 A1 discloses a multi-function peripheral (MFP) apparatus, wherein location data is provided via an external signal, and wherein reading of data stored in a recording medium is prevented when the location data of the MFP does not correspond to predetermined values.

The paper by M. Aziziyan et al: "SurroundSense: Mobile Phone Localization via Ambience Fingerprinting", NATIONAL LAB FOR INFORMATION SCIENCE AND TECHNOLOGY/MOBICOM'09, ACM, BEIJING,CHINA, 20 September 2009, pages 261-272, ISBN: 978-1-60558-702-8, XP058288613, aims to provide accurate location sensing which can e.g. distinguish locations between neighbouring stores on a high street and provide targeted offers to customers in a particular store. Therein, ambience data such as sound, light, colour or movement is measured at a mobile device and is subsequently sent to a central server for analysis. The analysis comprises fingerprinting techniques in order to associate specific locations which specific sets of measured ambience data

US 2015/0116757 A1 discloses an image forming apparatus which can determine its own location and which permits processing only if the measured location corresponds to location information pre-stored in its non-volatile memory.

An object of the present invention is to provide an information processing apparatus and a program capable of executing a processing request only when an external device is present in a specific environmental area.

### SUMMARY

An aspect of the present invention provides an information processing apparatus according to claim 1.

Another aspect of the present invention provides a method according to claim 7.

### BRIEF DESCRIPTION OF DRAWINGS

Exemplary embodiment(s) of the present invention will be described in detail based on the following figures, wherein:
Fig. 1 is a diagram illustrating a system configuration of an information processing system of a first embodiment of the present invention;
Fig. 2 is a block diagram illustrating a hardware configuration of an image forming apparatus 10 in the information processing system of the first embodiment of the present invention;
Fig. 3 is a block diagram illustrating a functional configuration of the image forming apparatus 10 in the information processing system of the first embodiment of the present invention;
Fig. 4 is a block diagram illustrating a hardware configuration of a terminal device 20 in the information processing system of the first embodiment of the present invention;
Fig. 5 is a block diagram illustrating a functional configuration of the terminal device 20 in the information processing system of the first embodiment of the present invention;
Figs. 6A to 6C are diagrams illustrating an example of acceleration data, atmospheric pressure data, and audio data measured by an acceleration sensor 41, an atmospheric pressure sensor 42, and a sound collection microphone 43 of an environmental information measurement unit 31, respectively;
Fig. 7 is a diagram illustrating a state in which FFT is applied to the acceleration data shown in Fig. 6A to calculate a periodogram and obtain a feature pattern of the acceleration;
Fig. 8 is a diagram for describing a method of generating a Lissajous figure in which acceleration data is on an X-axis and audio data is on a Y-axis to obtain a feature pattern;
Fig. 9 is a diagram for describing an operation when a print job including environmental information is transmitted from the terminal device 20 to the image forming apparatus 10;
Fig. 10 is a flowchart of an operation when the image forming apparatus 10 receives a print job including environmental information;
Fig. 11 is a diagram for describing an operation when image file data including environmental information is transmitted from the image forming apparatus 10 to the terminal device 20;
Fig. 12 is a flowchart of an operation when the terminal device 20 receives image file data including environmental information;
Fig. 13 is a diagram for describing a state in which the image forming apparatus 10 including the environmental information measurement unit 31 has moved from an installation place to another place;
Fig. 14 is a diagram illustrating an example when the image forming apparatus 10 performs displaying on an operation panel of the own apparatus to warn that an installation place has moved;
Fig. 15 is a diagram illustrating a system configuration of an information processing system of a second embodiment of the present invention; and
Fig. 16 is a flowchart of an operation when a wireless LAN terminal device 82 receiving a request for an authentication process from a portable terminal device 81 performs a comparison of feature patterns to execute the requested authentication process.

### DETAILED DESCRIPTION

Next, exemplary embodiments of the present invention will be described in detail with reference to the accompanying drawings.

### [First Embodiment]

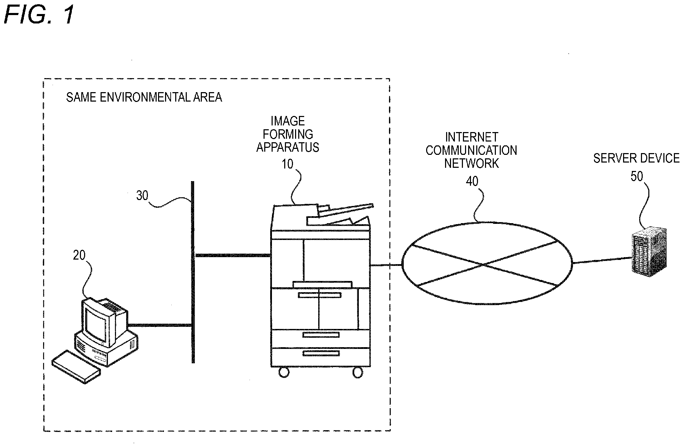

Fig. 1 is a diagram illustrating a configuration of an information processing system of a first embodiment of the present invention.

In the information processing system of this embodiment, an image forming apparatus 10 and a terminal device 20 are connected to each other by a network 30 as illustrated in Fig. 1. Further, the image forming apparatus 10 is connected to a server device 50 via an Internet communication network 40.

The terminal device 20 generates print data and transmits the generated print data to the image forming apparatus 10 over the network 30. The image forming apparatus 10 receives the print data transmitted from the terminal device 20, and outputs an image according to the print data onto a paper. Further, the image forming apparatus 10 is a apparatus referred to as a so-called multifunction apparatus having a plurality of functions such as a printing function, a scanning function, a copying function, and a facsimile function.

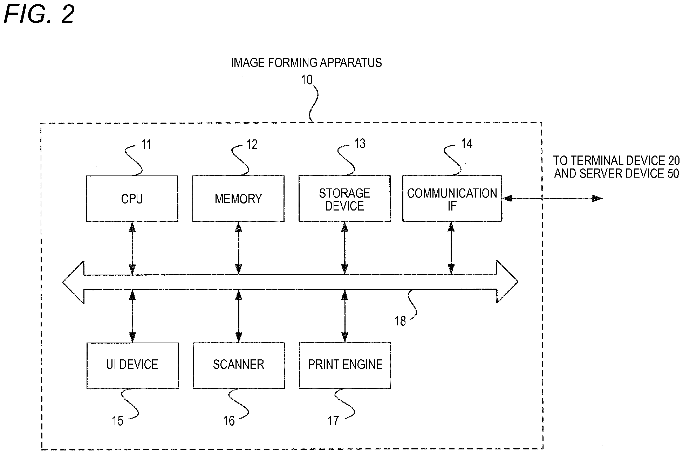

Next, a hardware configuration of the image forming apparatus 10 in the information processing system of this embodiment is illustrated in Fig. 2.

The image forming apparatus 10 includes a CPU 11, a memory 12, a storage device 13 such as a hard disk drive (HDD), a communication interface (IF) 14 that performs transmission and reception of data to and from an external device or the like over the network 30, a user interface (Ul) device 15 including a touch panel or a liquid crystal display, and a keyboard, a scanner 16, and a print engine 17, as illustrated in Fig. 2. These components are connected to each other via a control bus 18.

The print engine 17 prints an image on a recording medium such as printing paper through a process such as charging, exposure, development, transfer, and fixing.

The CPU 11 executes a predetermined process based on a control program stored in the memory 12 or in the storage device 13 to control an operation of the image forming apparatus 10.

While the CPU 11 has been described as reading and executing the control program stored in the memory 12 or the storage device 13 in this embodiment, the program may be stored in a non-transitory computer readable medium such as a CD-ROM and provided to the CPU 11.

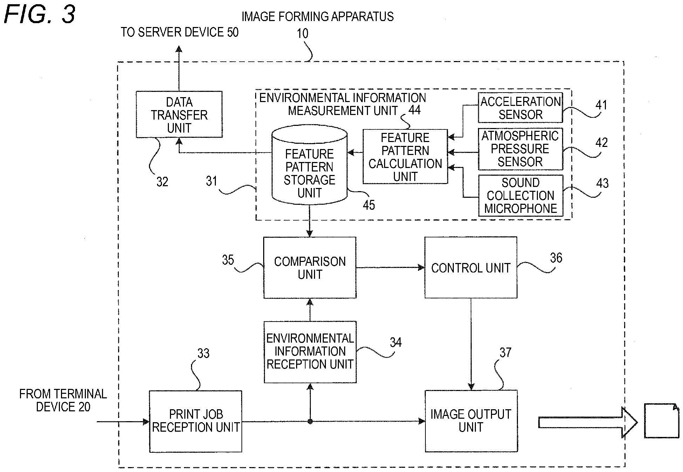

Fig. 3 is a block diagram illustrating a functional configuration of the image forming apparatus 10 realized by the above-described control program being executed.

The image forming apparatus 10 of this embodiment includes an environmental information measurement unit 31, a data transfer unit 32, a print job reception unit 33, an environmental information reception unit 34, a comparison unit 35, a control unit 36, and an image output unit 37, as illustrated in Fig. 3.

The environmental information measurement unit 31 measures environmental information of surroundings of a place for which the image forming apparatus 10 is set.

Specifically, the environmental information measurement unit 31 includes an acceleration sensor 41, an atmospheric pressure sensor 42, a sound collection microphone 43, a feature pattern calculation unit 44, and a feature pattern storage unit 45.

The acceleration sensor 41 measures a temporal change of the acceleration to acquire acceleration data. The atmospheric pressure sensor 42 measures a temporal change of the atmospheric pressure to acquire atmospheric pressure data. The sound collection microphone (sound sensor) 43 measures audio signals of surroundings to acquire audio data.

The feature pattern calculation unit 44 calculates a feature pattern based on the environmental data such as the acceleration data, the atmospheric pressure data, and the audio data acquired by the acceleration sensor 41, the atmospheric pressure sensor 42, and the sound collection microphone 43, which are acquired by the acquisition unit. Specifically, the feature pattern calculation unit 44 calculates the feature pattern by applying Fast Fourier transform (FFT) to the environmental data. A specific method of calculating this feature pattern will be described in detail below.

The feature pattern storage unit 45 stores, as environmental information, the feature pattern calculated by the feature pattern calculation unit 44. The feature pattern storage unit 45 may store the feature pattern calculated by the feature pattern calculation unit 44 in association with time related information. More specifically, the feature pattern storage unit 45 may store the feature pattern calculated by the feature pattern calculation unit 44 for each combination of at least one or more of a day, a time of day, or a day of week. For example, the feature pattern storage unit 45 may store the feature pattern for the combination of working hours and non-working hours, a time of date such as morning, afternoon and nighttime, or ordinal days and holidays like public holiday. More specifically, the feature pattern storage unit 45 may store the feature pattern on a specific date and time such as 15:00 on October 10.

While the case in which three sensors including the acceleration sensor 41, the atmospheric pressure sensor 42, and the sound collection microphone 43 are used as acquisition means for acquiring environmental data has been described in this embodiment, a type of sensor is not limited thereto. Any one of various sensors such as the three sensors, a temperature sensor, a humidity sensor, a luminance sensor, and a magnetic sensor, or a combination of at least two or more thereof may be used as the acquisition means for acquiring environmental data.

In this case, any one of atmospheric pressure data, audio data, acceleration data, temperature data, humidity data, luminance data, and magnetic data, or a combination of at least two or more thereof is acquired as the environmental data.

The data transfer unit 32 transfers the feature pattern measured by the environmental information measurement unit 31 as environmental information to another device such as the server device 50, for example, at predetermined time intervals such as daily or weekly.

The print job reception unit 33 receives a print job (print instruction) from an external device such as the terminal device 20.

The image output unit 37 outputs an image to the recording medium based on the print job received by the print job reception unit 33.

When the environmental information reception unit 34 receives the print job from the external device such as the terminal device 20, the environmental information reception unit 34 receives the environmental information from the terminal device 20 or a device associated with the terminal device 20. In this embodiment, the environmental information reception unit 34 receives, as the environmental information, the feature pattern data included in the print job received by the print job reception unit 33.

The comparison unit 35 compares the environmental information received by the environmental information measurement unit 31 with the environmental information measured by the environmental information reception unit 34. Specifically, the comparison unit 35 compares the feature pattern stored in the feature pattern storage unit 45 with the feature pattern received as the environmental information by the environmental information reception unit 34.

When the two pieces of environmental information compared by the comparison unit 35 are environmental information measured in the same environment, the control unit 36 executes a process based on a processing request for received print job or the like (processing unit). Specifically, when the two compared feature patterns match each other at a predetermined matching rate (for example, 90%) or more, the control unit 36 causes the image output unit 37 to execute a printing process based on the received print job.

Further, the comparison unit 35 compares the feature pattern calculated by the feature pattern calculation unit 44 with the feature pattern based on past environmental data stored in the feature pattern storage unit 45. When the two feature patterns compared by the comparison unit 35 are different from each other, the control unit 36 determines that the installation place of the image forming apparatus 10 has moved to a different environmental area, and notifies that the installation place of the image forming apparatus 10 has changed (notification unit).

Specifically, the control unit 36 may notify that the installation place of the image forming apparatus 10 has moved by transmitting an e-mail to a preset destination, or may perform notification to the user moving the apparatus by performing displaying on the operation panel of the apparatus to warn that the installation place has moved.

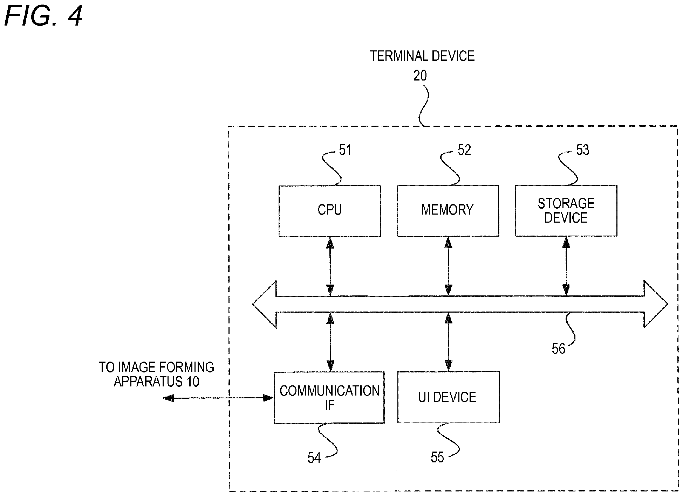

Next, a hardware configuration of the terminal device 20 in the information processing system of this embodiment is illustrated in Fig. 4.

The terminal device 20 includes a CPU 51, a memory 52, a storage device 53 such as a hard disk drive (HDD), a communication interface (IF) 54 that performs transmission and reception of data to and from the image forming apparatus 10 over the network 30, and a user interface (Ul) device 55 including a touch panel or a liquid crystal display and a keyboard, as illustrated in Fig. 4. These components are connected to each other via a control bus 56.

The CPU 51 executes a predetermined process based on the control program stored in the memory 52 or the storage device 53 to control the operation of the terminal device 20.

While the CPU 51 has been described as reading and executing the control program stored in the memory 52 or the storage device 53 in this embodiment, the program may be stored in a non-transitory computer readable medium such as a CD-ROM and provided to the CPU 51.

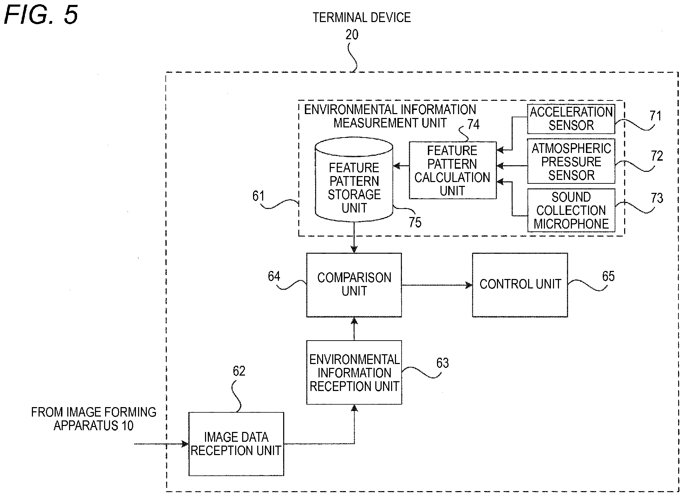

Fig. 5 is a block diagram illustrating a functional configuration of the terminal device 20 realized by the above-described control program being executed.

The terminal device 20 includes an environmental information measurement unit 61, an image data reception unit 62, an environmental information reception unit 63, a comparison unit 64, and a control unit 65, as illustrated in Fig. 5.

The environmental information measurement unit 61 has the same function as the environmental information measurement unit 31 in the image forming apparatus 10 illustrated in Fig. 3, and measures the environmental information of surroundings of a place at which the terminal device 20 is set.

Specifically, the environmental information measurement unit 61 includes an acceleration sensor 71, an atmospheric pressure sensor 72, a sound collection microphone 73, a feature pattern calculation unit 74, and a feature pattern storage unit 75. Since the acceleration sensor 71, the atmospheric pressure sensor 72, the sound collection microphone 73, the feature pattern calculation unit 74, and the feature pattern storage unit 75 have the same functions as the acceleration sensor 41, the atmospheric pressure sensor 42, the microphone 43, the feature pattern calculation unit 44, and the feature pattern storage unit 45 in the environmental information measurement unit 31 illustrated in Fig. 3, respectively, description thereof will be omitted.

The image data reception unit 62 receives image data obtained by scanning a document from an external device such as the image forming apparatus 10. Here, this image data has a file format and is viewable using corresponding software on the terminal device 20.

The environmental information reception unit 63 acquires the environmental information from the image file data received by the image data reception unit 62.

The comparison unit 64 compares the environmental information included in the image file data generated by the image forming apparatus 10, which is obtained by the environmental information reception unit 63, with the environmental information measured by the environmental information measurement unit 61.

When the two pieces of environmental information compared by the comparison unit 64 are environmental information measured in the same environment, the control unit 65 permits a process for the image file data, that is, permits a process of viewing content (permission means).

Next, a measurement operation of the environmental information in the environmental information measurement units 31 and 61 in the image forming apparatus 10 and the terminal device 20 will be described in detail with reference to the accompanying drawings. While only a measurement operation of the environmental information measurement unit 31 in the image forming apparatus 10 will be hereinafter described, the same process is also performed in the environmental information measurement unit 61.

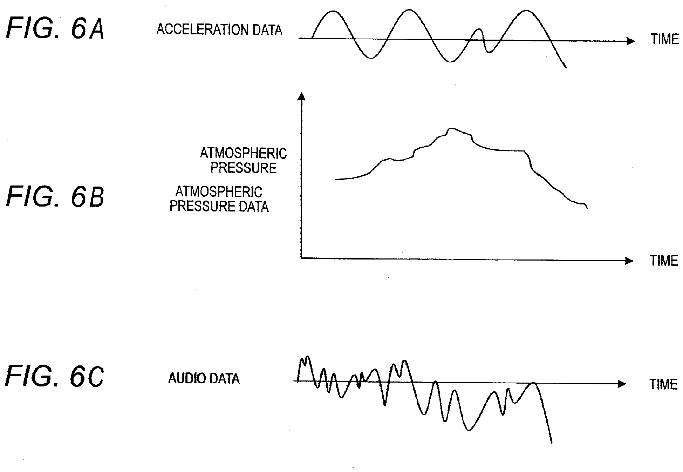

First, examples of the acceleration data, the atmospheric pressure data, and the audio data measured by the acceleration sensor 41, the atmospheric pressure sensor 42, and the sound collection microphone 43 of the environmental information measurement unit 31 are illustrated in Figs. 6A, 6B, and 6C, respectively.

The feature pattern calculation unit 44 generates a periodogram by applying a Fourier transform process to the data of a processing time in the environmental data. This periodogram is a plot of a frequency component and amplitude thereof extracted from the environmental data, and includes data having characteristics in an environmental area in which the environmental information has been measured.

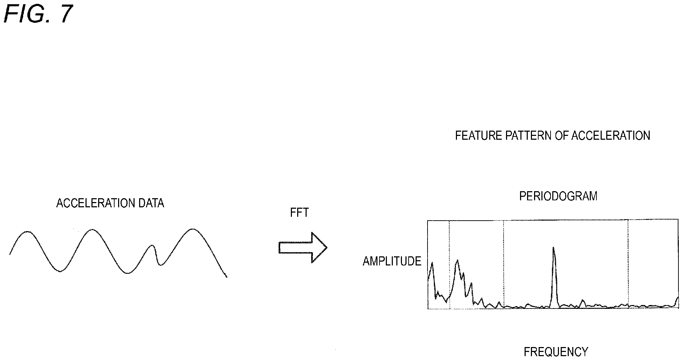

A state in which FFT is applied to the acceleration data as illustrated in Fig. 6A to calculate the periodogram and obtain a feature pattern of the acceleration is illustrated in Fig. 7.

Further, process other than the FFT may also be applied to the environmental data such as acceleration data to calculate the feature pattern of the environmental data.

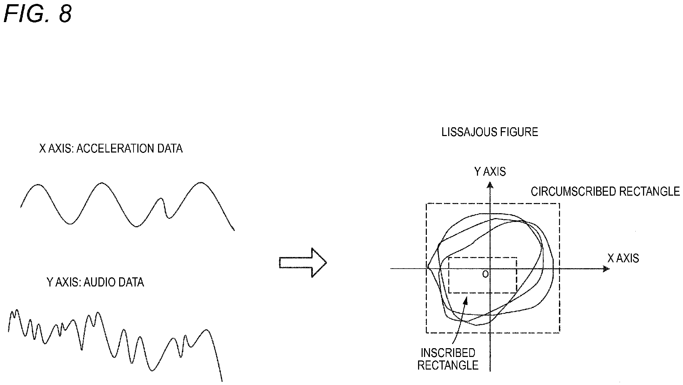

For example, in the calculation method illustrated in Fig. 8, a method of obtaining a feature pattern by generating a Lissajous figure in which the acceleration data is on the X-axis and the audio data is on the Y-axis, and obtaining a circumscribed rectangle and an inscribed rectangle of the Lissajous figure is illustrated. In this method, for example, an allowable range is set for the circumscribed rectangle and the inscribed rectangle of one Lissajous figure obtained from the two compared pieces of environmental information. When the other Lissajous figure falls within the allowable range, the two pieces of environmental information can be determined as matching each other.

Next, a specific operation performed between the image forming apparatus 10 and the terminal device 20 using the measured environmental information will be described.

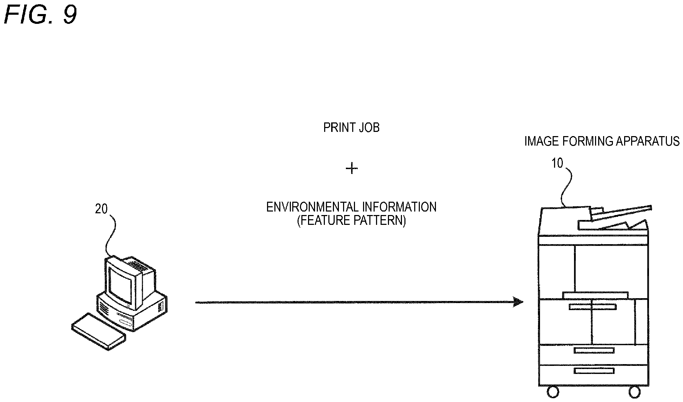

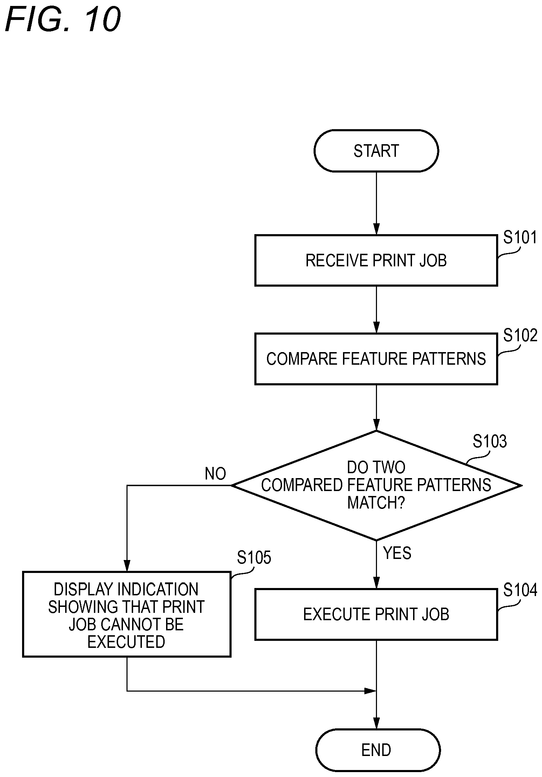

First, an operation when a print job in which the environmental information is included is transmitted from the terminal device 20 to the image forming apparatus 10 as illustrated in Fig. 9 will be described. Fig. 10 is a flowchart illustrating an operation when the image forming apparatus 10 receives the print job in which the environmental information is included.

In the image forming apparatus 10, when the print job is received by the print job reception unit 33, the environmental information reception unit 34 extracts the environmental information, that is, feature pattern data from the print job (step S101).

Then, the comparison unit 35 compares the feature pattern of the environmental information received by the environmental information reception unit 34 with the feature pattern stored in the feature pattern storage unit 45 (step S102).

When the two compared feature patterns match (yes in step S103), the control unit 36 determines that the terminal device 20 is installed in the same environmental area as the environmental area in which the image forming apparatus 10 is set, executes the print job from the terminal device 20 received by the print job reception unit 33, and controls the image output unit 37 so that an image based on the print job is output onto the printing paper (step S104).

When the two compared feature patterns do not match (no in step S103), the control unit 36 displays an indication showing that the print job cannot be executed, for example, on the operation panel of the image forming apparatus 10 (step S105).

Here, the same environmental area is, for example, an area in which an environment such as sound, vibration, temperature or humidity is considered to be substantially the same, such as the same room, the same floor, or the same building. That is, the environmental data measured in the same area is considered to be data specific to an environmental area thereof, and to be an environmental data measured in another environmental area.

For example, since there is a unique weak vibration in each building, it can be determined whether or not the areas are within the same building by measuring vibration data. Further, since the atmospheric pressure is low when a ground height is high, the atmospheric pressure is low at a high floor in the same building. Therefore, by performing a comparison using an atmospheric pressure variation as the environmental data, it can be determined whether or not the two pieces of environmental data have been measured in the same environmental area.

Further, since office-specific sounds such as air conditioning sounds or mechanical sounds may be generated if the areas are within the same room such as a narrow office, it can be determined whether or not the areas are within the same room by measuring audio data.

In particular, it is considered that, even when the determination cannot be performed based on only single environmental data, it can be determined whether two pieces of environmental data has been measured to be the same environmental data by combining a plurality of environmental data.

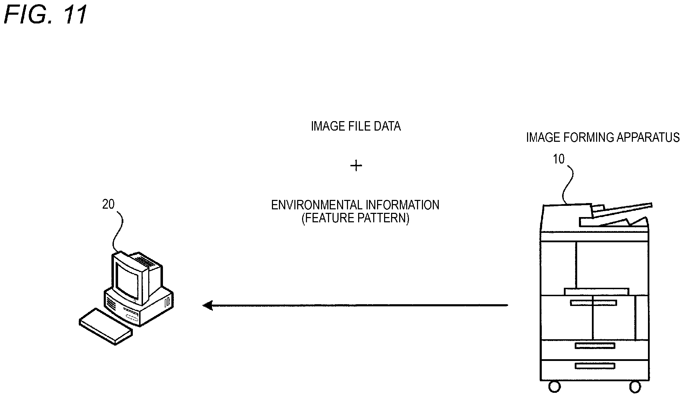

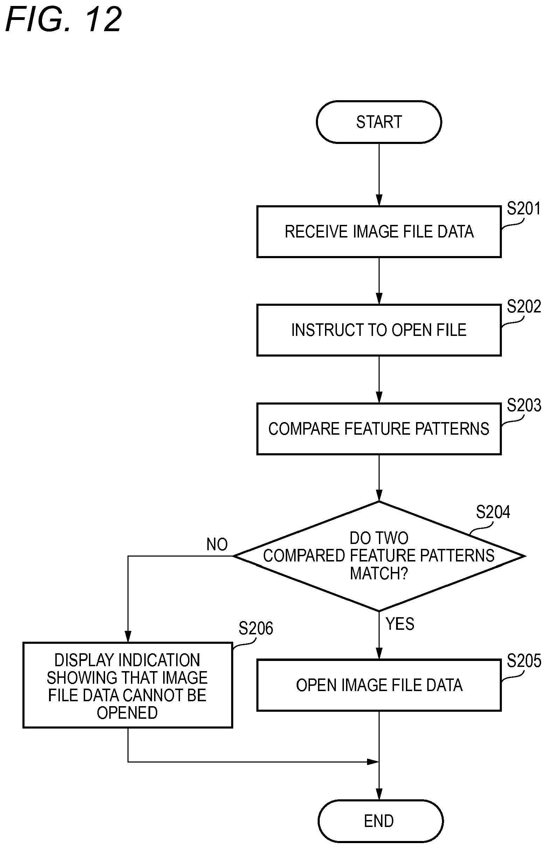

Next, an operation when image file data in which the environmental information is included is transmitted from the image forming apparatus 10 to the terminal device 20 as illustrated in Fig. 11 will be described. Fig. 12 is a flowchart illustrating an operation when image file data in which environmental information is included is received from the terminal device 20.

In the terminal device 20, when the image file data is received by the image data reception unit 62, the environmental information reception unit 63 extracts the environmental information, that is, the feature pattern data from the image file data (step S201).

For example, when the user has instructed to open and view the file by double-clicking the image file data (step S202), the comparison unit 64 compares the feature pattern received by the environmental information reception unit 63 with the feature pattern stored in the feature pattern storage unit 75 (step S203).

When the two compared feature patterns match (yes in step S204), the control unit 65 executes a process of determining that the terminal device 20 is installed in the same environmental area as the environmental area in which the image forming apparatus 10 is set, and permitting viewing of the image file data for which an instruction to open the file has been received such that the image file data is opened and displayed on the screen (step S205).

When the two compared feature patterns do not match (no in step S204), the control unit 65 displays on a display of the terminal device 20 for example, an indication showing that the image file data cannot be opened (Step S206).

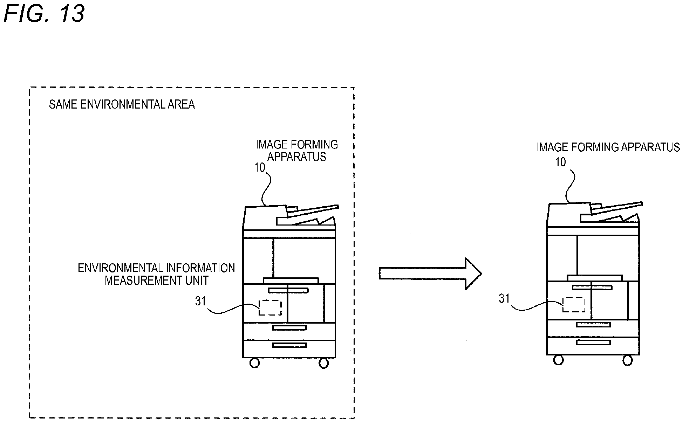

Next, an operation when the image forming apparatus 10 including the environmental information measurement unit 31 has moved from a certain installation place to another place will be described with reference to Fig. 13.

As described above, the comparison unit 35 compares the feature pattern calculated by the feature pattern calculation unit 44 with the feature pattern based on past environmental data stored in the feature pattern storage unit 45 at predetermined time intervals, such as daily.

Therefore, when the image forming apparatus 10 has moved from a certain installation place to a place of another environmental area as above, it is determined that the latest feature pattern and the feature pattern based on the past environmental data stored in the feature pattern storage unit 45, compared by the comparison unit 35, differ from each other.

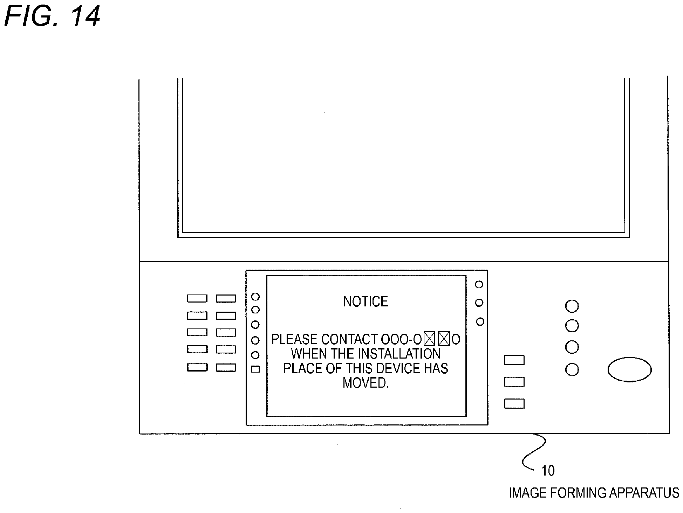

Then, the control unit 36 determines that the installation place of the image forming apparatus 10 has moved to another environmental area, and notifies a preset destination that the installation place of the own apparatus has moved by transmitting an e-mail to the destination, and performs displaying on the operation panel of the apparatus to warn that the installation place has moved, as illustrated in Fig. 14.

Referring to Fig. 14, it can be seen that a sentence "Please contact ○○○-○Δ□○ when the installation place of this apparatus has moved" is displayed on the operation panel of the image forming apparatus 10, and a display requesting the user moving the image forming apparatus 10 to contact a service company managing maintenance of the apparatus is performed.

The movement of such an image forming apparatus 10 can be detected, for example, if a position information measurement device such as a GPS receiver is included. However, according to the method of detecting that the image forming apparatus 10 has moved based on the environmental data as in this embodiment, the movement can be detected, even when the image forming apparatus 10 is installed at a place where radio waves from a GPS satellite cannot be received.

Further, the data transfer unit 32 transfers the feature pattern measured by the environmental information measurement unit 31 to the server device 50, for example, at predetermined time intervals, such as daily or weekly. Therefore, the feature pattern transferred to the server device 50 continues to be monitored and, when a great change in this feature pattern is detected, the installation place of the image forming apparatus 10 can be detected to have moved.

### [Second embodiment]

Next, an information processing system of a second embodiment of the present invention will be described.

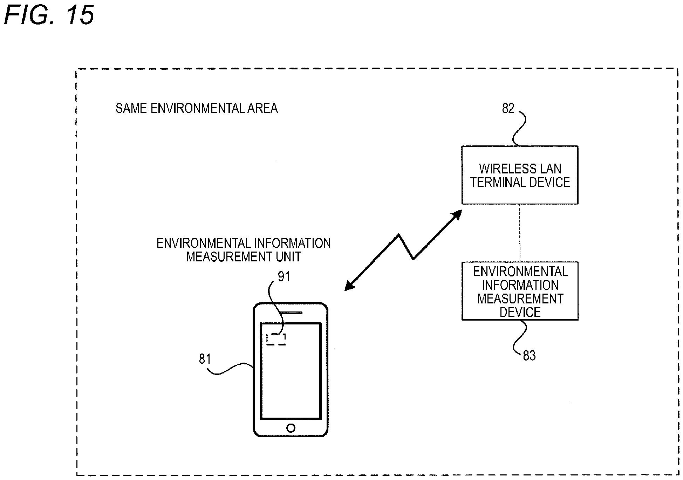

A configuration of the information processing system of this embodiment will be described with reference to Fig. 15. The information processing system of this embodiment includes a portable terminal device 81 such as a smart phone having an environmental information measurement unit 91, a wireless LAN terminal device 82, and an environmental information measurement device 83, as illustrated in Fig. 15.

The environmental information measurement unit 91 has the same configuration as that of the environmental information measurement unit 31 illustrated in Fig. 3 or the environmental information measurement unit 61 illustrated in Fig. 5, and measures the environmental information of surroundings of the portable terminal device 81.

Further, the environmental information measurement device 83 has the same configuration as that of the environmental information measurement unit 31 illustrated in Fig. 3 or the environmental information measurement unit 61 illustrated in Fig. 5, and measures the environmental information of surroundings of the own device.

The wireless LAN terminal device 82 is a device for performing a wireless connection with the portable terminal device 81, and performs an authentication process based on an authentication request from the portable terminal device 81 to start the wireless connection.

The wireless LAN terminal device 82 and the environmental information measurement device 83 do not necessarily need to be connected to be able to transmit and receive data, and may be associated with each other.

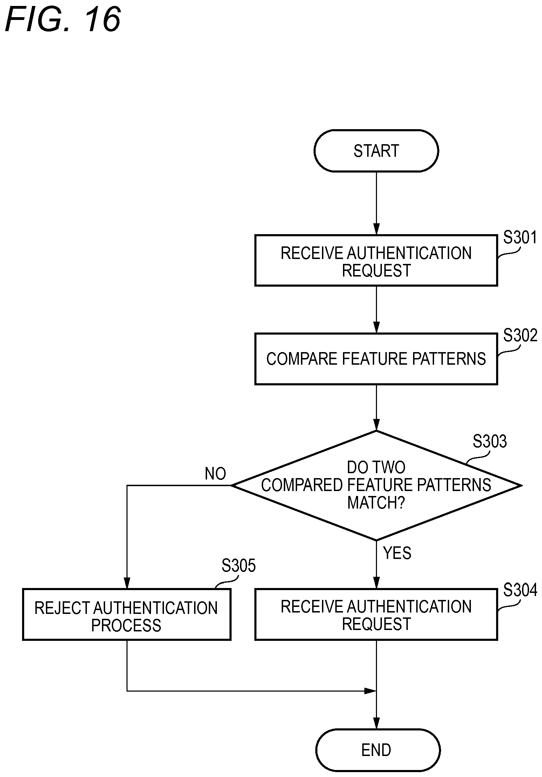

First, an operation when a comparison of feature patterns is performed in the wireless LAN terminal device 82 receiving a request for an authentication process from the portable terminal device 81, and the requested authentication process is executed when the two feature patterns match, will be described with reference to a flowchart of Fig. 16.

Here, the feature pattern (environmental information) measured by the environmental information measurement device 83 is transmitted to the wireless LAN terminal device 82 by a wired or wireless connection.

First, when the wireless LAN terminal device 82 receives an authentication request from the portable terminal device 81 (step S301), the wireless LAN terminal device 82 acquires the feature pattern from the environmental information measurement device 83.

The wireless LAN terminal device 82 compares a feature pattern included in the authentication request from the portable terminal device 81 with the feature pattern acquired from the environmental information measurement device 83 (step S302).

When the two compared feature patterns match (yes in step S303), the wireless LAN terminal device 82 determines whether the portable terminal device 81 exists in the same environmental area as the own device, and executes the authentication process requested by the portable terminal device 81 (step S304).

When the two compared feature patterns do not match (no in step S303), the wireless LAN terminal device 82 rejects the authentication process requested by the portable terminal device 81 (step S305).

By performing such a process, only when the portable terminal device 81 exists in the environmental area in which the environmental information measurement device 83 is installed (that is, environmental area in which the wireless LAN terminal device 82 is installed), a connection between the portable terminal device 81 and the wireless LAN terminal device 82 is permitted.

While the comparison of the two feature patterns has been performed by the wireless LAN terminal device 82 in the above description, a process of comparing the two feature patterns may be performed by the portable terminal device 81.

In this case, when an environmental information reception unit in the portable terminal device 81 receives a processing request from the wireless LAN terminal device 82, the environmental information reception unit receives the environmental information directly from the wireless LAN terminal device 82 or receives the environmental information from the environmental information measurement device 83 associated with the wireless LAN terminal device 82.

In the portable terminal device 81, the received environmental information is compared with the environmental information measured by the environmental information measurement unit 91 of the portable terminal device 81, and the requested process is executed when the two compared environmental information match.

### [Modification example]

The case in which each of the image forming apparatus 10 and the terminal device 20 measures the environmental information, the image forming apparatus 10 or the terminal device 20 confirms that the measured pieces of environmental information match, and the image forming apparatus 10 executes the print job from the terminal device 20 or the image forming apparatus 10 permits viewing of the image file from the terminal device 20, has been described in the first embodiment, but the present invention is not limited thereto. The present invention can be similarly applied to a case in which each of the information processing apparatus and an external device different from the information processing apparatus may measure the environmental information, the information processing apparatus confirms that the pieces of measured environmental information match and execute a specific process such as a processing request from the external processing device.

Further, while the case in which each of the portable terminal device 81 and the environmental information measurement device 83 measures the environmental information, and the wireless LAN terminal device 82 confirms that the pieces of measured environmental information match each other and authenticates a wireless connection between the wireless LAN terminal device 82 and the portable terminal device 81 has been described in the second embodiment, the present invention is not limited thereto. The present invention can be similarly applied to a case in which each of a movable information processing apparatus and a usually installed information processing apparatus measures environmental information, and any one of the information processing apparatuses confirms that the measured pieces of environmental information match, and executes a processing request from the other information processing apparatus.

The embodiment(s) discussed above may disclose the following matters.
[1] An information processing apparatus including: a measurement unit that measures environmental information about an environment surrounding the information processing apparatus; a comparison unit that compares environmental information included in file data generated by an external device with the environmental information measured by the measurement unit; and a permitting unit that permits a process for the file data in a case where the comparison unit determines that the environmental information included in the file data and the environmental information measured by the measurement unit that are compared by the comparison unit are determined to be measured in a same environment.
[2] The information processing apparatus according to [1], in which the environmental information is a feature pattern obtained based on environmental data, the measurement unit includes an acquisition unit that acquires environmental data about an environment surrounding the information processing apparatus, a calculation unit that calculates a feature pattern based on the environmental data acquired by the acquisition unit, and a storage unit that stores the feature pattern calculated by the calculation unit, the comparison unit compares the feature pattern stored in the storage unit with the feature pattern included in the file data, and the permitting unit executes a process received in a case where a matching rate between the feature pattern stored in the storing unit and the feature pattern included in the file data is equal to or higher than a predetermined threshold.
[3] An image forming apparatus including: the information processing apparatus according to [1]; a reception unit that receives a print instruction from the external device; and an output unit that outputs an image on a recording medium based on the print instruction received by the reception unit in a case where the permitting unit permits the process.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following
claims.

## Claims

1. A system comprising an information processing apparatus (10) and an external device (20), the information processing apparatus (10) comprising:
a measurement unit (31) that measures environmental information about an environment surrounding the information processing apparatus;
a reception unit (34) that receives environmental information which has been measured by the external device (20) or a device associated with the external device (20) in response to receiving a processing request from the external device (20);
a comparison unit (35) that compares the environmental information measured by the measurement unit (31) with the environmental information received by the reception unit (34); and
a processing unit (36) that executes a process based on the received processing request in a case where the environmental information received by the reception unit (34) and the environmental information measured by the measurement unit (31) that are compared by the comparison unit (35) are determined to be measured in a same environment, wherein
the environmental information is a feature pattern obtained based on environmental data,
the measurement unit (31) includes
an acquisition unit (41, 42, 43) that acquires environmental data about an environment surrounding the information processing apparatus (10),
a calculation unit (44) that calculates a feature pattern based on the environmental data acquired by the acquisition unit (41, 42, 43), and
a storage unit (45) that stores the feature pattern calculated by the calculation unit (44),
the comparison unit (35) compares the feature pattern stored in the storage unit (44) with the feature pattern received by the reception unit (34), and
the processing unit (36) executes a process based on the processing request received in a case where a matching rate between the feature pattern stored in the storage unit (44) and the feature pattern received by the reception unit (34) is equal to or higher than a predetermined threshold.

2. The system according claim 1, wherein the information processing apparatus (10) further comprises:
an acquisition unit (41, 42, 43) that acquires environmental data about an environment surrounding the information processing apparatus (10),
a calculation unit (44) that calculates a feature pattern based on the environmental data acquired by the acquisition unit (41, 42, 43),
a storage unit (45) that stores the feature pattern calculated by the calculation unit (44);
a comparison unit (35) that compares the feature pattern presently calculated by the calculation unit (44) with the feature pattern previously calculated by the calculation unit (44) and stored in the storage unit (45), and
a notification unit (36) that notifies that an installation place of the information processing apparatus (10) has changed in a case where the feature pattern presently calculated by the calculation unit (44) and the feature pattern stored in the storage unit (45) compared by the comparison unit (35) are different from each other.

3. The system according to claim 1 or 2,
wherein the calculation unit (44) calculates the feature pattern by performing a predetermined conversion process on the environmental data acquired during a predetermined period.

4. The system according to any one of claims 1 to 3,
wherein the storage unit (45) stores the feature pattern calculated by the calculation unit (44) in association with time related information.

5. The system according to claim 4,
wherein the storage unit (45) stores the feature pattern calculated by the calculation unit (44) for a combination of at least one or more of a day, a time of day, and a day of week.

6. The system according to any one of claims 1 to 5,
wherein the acquisition unit (41, 42, 43) includes at least one of an atmospheric pressure sensor (42), a sound sensor (43), an acceleration sensor (41), a temperature sensor, a humidity sensor, a luminance sensor, and a magnetic sensor, and
the environmental data includes at least one of atmospheric pressure data, audio data, acceleration data, temperature data, humidity data, luminance data, and magnetic data.

7. A method comprising:
at an information processing apparatus, measuring environmental information about an environment surrounding the information processing apparatus;
measuring environmental information at an external device or at a device associated with the external device, and receiving (S101; S201) the environmental information, measured at the external device or at the device associated with the external device, at the information processing apparatus in response to receiving a processing request from the external device;
at the information processing apparatus, comparing (S102; S203) the environmental information, measured at the information processing apparatus, with the received environmental information; and
at the information processing apparatus, executing (S104; S205) a process based on the received processing request in a case where the environmental information measured at the information processing apparatus and the received environmental information are determined to be measured in the same environment as a result of the comparing, wherein
the environmental information is a feature pattern obtained based on environmental data, and
the method further comprises, at the information processing apparatus
acquiring environmental data about an environment surrounding the information processing apparatus,
calculating a feature pattern based on the acquired environmental data,
storing the calculated feature pattern,
comparing the stored feature pattern with the received feature pattern, and
executing a process based on the received processing request in a case where a matching rate between the stored feature pattern and the received feature pattern is equal to or higher than a predetermined threshold.

## Patentansprüche

1. System, umfassend ein Informationsverarbeitungsgerät (10) und eine externe Vorrichtung (20), wobei das Informationsverarbeitungsgerät (10) Folgendes umfasst:
eine Messeinheit (31), die Umgebungsinformationen über eine Umgebung misst, die das Informationsverarbeitungsgerät umgibt;
eine Empfangseinheit (34), die Umgebungsinformationen empfängt, die durch die externe Vorrichtung (20) oder eine Vorrichtung, die mit der externen Vorrichtung (20) verknüpft ist, als Reaktion auf den Empfang einer Verarbeitungsanfrage von der externen Vorrichtung (20) gemessen wurden;
eine Vergleichseinheit (35), welche die Umgebungsinformationen, die durch die Messeinheit (31) gemessen werden, mit den Umgebungsinformationen, die durch die Empfangseinheit (34) empfangen werden, vergleicht; und
eine Verarbeitungseinheit (36), die basierend auf der empfangenen Verarbeitungsanfrage einen Prozess ausführt für den Fall, dass bestimmt wird, dass die Umgebungsinformationen, die durch die Empfangseinheit (34) empfangen werden, und die Umgebungsinformationen, die durch die Messeinheit (31) gemessen werden, die durch die Vergleichseinheit (35) verglichen werden, in derselben Umgebung gemessen werden, wobei
die Umgebungsinformationen ein Merkmalsmuster sind, das basierend auf Umgebungsdaten erzielt wird,
die Messeinheit (31) umfasst
eine Erfassungseinheit (41, 42, 43), die Umgebungsdaten über eine Umgebung erfasst, die das Informationsverarbeitungsgerät (10) umgibt,
eine Recheneinheit (44), die ein Merkmalsmuster basierend auf den Umgebungsdaten, die durch die Erfassungseinheit (41, 42, 43) erfasst werden, berechnet, und
eine Speichereinheit (45), die das Merkmalsmuster speichert, das durch die Recheneinheit (44) berechnet wird,
die Vergleichseinheit (35) das Merkmalsmuster, das in der Speichereinheit (44) gespeichert ist, mit dem Merkmalsmuster, das durch die Empfangseinheit (34) empfangen wird, vergleicht, und die Verarbeitungseinheit (36) basierend auf der empfangenen Verarbeitungsanfrage einen Prozess ausführt für den Fall, dass eine Übereinstimmungsrate zwischen dem Merkmalsmuster, das in der Speichereinheit (44) gespeichert ist, und dem Merkmalsmuster, das durch die Empfangseinheit (34) empfangen wird, gleich oder höher als eine vorbestimmte Schwelle ist.

2. System nach Anspruch 1, wobei das Informationsverarbeitungsgerät (10) ferner Folgendes umfasst:
eine Erfassungseinheit (41, 42, 43), die Umgebungsdaten über eine Umgebung erfasst, die das Informationsverarbeitungsgerät (10) umgibt,
eine Recheneinheit (44), die ein Merkmalsmuster basierend auf den Umgebungsdaten, die durch die Erfassungseinheit (41, 42, 43) erfasst werden, berechnet,
eine Speichereinheit (45), die das Merkmalsmuster speichert, das durch die Recheneinheit (44) berechnet wird;
eine Vergleichseinheit (35), die das Merkmalsmuster, das gerade durch die Recheneinheit (44) berechnet wird, mit dem Merkmalsmuster vergleicht, das zuvor durch die Recheneinheit (44) berechnet wurde und in der Speichereinheit (45) gespeichert ist, und
eine Meldeeinheit (36), die meldet, dass sich ein Installationsort des Informationsverarbeitungsgeräts (10) geändert hat, für den Fall, dass das Merkmalsmuster, das gerade durch die Recheneinheit (44) berechnet wird, und das Merkmalsmuster, das in der Speichereinheit (45) gespeichert ist, die durch die Vergleichseinheit (35) verglichen werden, unterschiedlich sind.

3. System nach Anspruch 1 oder 2,
wobei die Recheneinheit (44) das Merkmalsmuster berechnet, indem sie einen vorbestimmten Umwandlungsprozess an den Umgebungsdaten ausführt, die während einer vorbestimmten Periode erfasst wurden.

4. System nach einem der Ansprüche 1 bis 3,
wobei die Speichereinheit (45) das Merkmalsmuster, das durch die Recheneinheit (44) berechnet wird, in Verbindung mit zeitbezogenen Informationen speichert.

5. System nach Anspruch 4,
wobei die Speichereinheit (45) das Merkmalsmuster, das durch die Recheneinheit (44) berechnet wird, für eine Kombination von mindestens einem oder mehreren von einem Tag, einer Uhrzeit und einem Wochentag speichert.

6. System nach einem der Ansprüche 1 bis 5,
wobei die Erfassungseinheit (41, 42, 43) mindestens einen umfasst von einem Atmosphärendrucksensor (42), einem Tonsensor (43), einem Beschleunigungssensor (41), einem Temperatursensor, einem Feuchtigkeitssensor, einem Luminanzsensor und einem Magnetsensor, und
die Umgebungsdaten mindestens eines umfassen von Atmosphärendruckdaten, Audiodaten, Beschleunigungsdaten, Temperaturdaten, Feuchtigkeitsdaten, Luminanzdaten und Magnetdaten.

7. Verfahren, umfassend folgende Schritte:
an einem Informationsverarbeitungsgerät, Messen von Umgebungsinformationen über eine Umgebung, die das Informationsverarbeitungsgerät umgibt;
Messen von Umgebungsinformationen an einer externen Vorrichtung oder an einer Vorrichtung, die mit der externen Vorrichtung verknüpft ist, und Empfangen (S101; S201) der Umgebungsinformationen, die an der externen Vorrichtung oder an der Vorrichtung, die mit der externen Vorrichtung verknüpft ist, gemessen werden, an dem Informationsverarbeitungsgerät als Reaktion auf das Empfangen einer Verarbeitungsanfrage von der externen Vorrichtung;
an dem Informationsverarbeitungsgerät, Vergleichen (S102; S203) der Umgebungsinformationen, die an dem Informationsverarbeitungsgerät gemessen werden, mit den empfangenen Umgebungsinformationen; und
an dem Informationsverarbeitungsgerät, Ausführen (S104; S205) eines Prozesses basierend auf der empfangenen Verarbeitungsanfrage für den Fall, dass bestimmt wird, dass die Umgebungsinformationen, die an dem Informationsverarbeitungsgerät gemessen werden, und die empfangenen Umgebungsinformationen in derselben Umgebung gemessen werden als Ergebnis des Vergleichs, wobei
die Umgebungsinformationen ein Merkmalsmuster sind, das basierend auf Umgebungsdaten erzielt wird, und
das Verfahren an dem Informationsverarbeitungsgerät ferner Folgendes umfasst
Erfassen von Umgebungsdaten über eine Umgebung, die das Informationsverarbeitungsgerät umgibt,
Berechnen eines Merkmalsmusters basierend auf den erfassten Umgebungsdaten, Speichern des berechneten Merkmalsmusters,
Vergleichen des gespeicherten Merkmalsmusters mit dem empfangenen Merkmalsmuster, und
Ausführen eines Prozesses basierend auf der empfangenen Verarbeitungsanfrage für den Fall, dass eine Übereinstimmungsrate zwischen dem gespeicherten Merkmalsmuster und dem empfangenen Merkmalsmuster gleich oder höher als eine vorbestimmte Schwelle ist.

## Revendications

1. Système comprenant un appareil de traitement d'informations (10) et un dispositif externe (20), l'appareil de traitement d'informations (10) comprenant :
une unité de mesure (31) qui mesure des informations environnementales concernant un environnement entourant l'appareil de traitement d'informations ;
une unité de réception (34) qui reçoit des informations environnementales qui ont été mesurées par le dispositif externe (20) ou un dispositif associé au dispositif externe (20) en réponse à la réception d'une demande de traitement du dispositif externe (20) ;
une unité de comparaison (35) qui compare les informations environnementales mesurées par l'unité de mesure (31) avec les informations environnementales reçues par l'unité de réception (34) ; et
une unité de traitement (36) qui exécute un processus sur la base de la demande de traitement reçue dans un cas où les informations environnementales reçues par l'unité de réception (34) et les informations environnementales mesurées par l'unité de mesure (31) qui sont comparées par l'unité de comparaison (35) sont déterminées pour être mesurées dans un même environnement, dans lequel
les informations environnementales sont un motif caractéristique obtenu sur la base de données environnementales,
l'unité de mesure (31) comprend
une unité d'acquisition (41, 42, 43) qui acquiert des données environnementales concernant un environnement entourant l'appareil de traitement d'informations (10),
une unité de calcul (44) qui calcule un motif caractéristique sur la base des données environnementales acquises par l'unité d'acquisition (41, 42, 43), et
une unité de stockage (45) qui stocke le motif caractéristique calculé par l'unité de calcul (44),
l'unité de comparaison (35) compare le motif caractéristique stocké dans l'unité de stockage (44) avec le motif caractéristique reçu par l'unité de réception (34), et
l'unité de traitement (36) exécute un processus sur la base de la demande de traitement reçue dans un cas où un taux de correspondance entre le motif caractéristique stocké dans l'unité de stockage (44) et le motif caractéristique reçu par l'unité de réception (34) est égal ou supérieur à un seuil prédéterminé.

2. Système selon la revendication 1, dans lequel l'appareil de traitement d'informations (10) comprend en outre :
une unité d'acquisition (41, 42, 43) qui acquiert des données environnementales concernant un environnement entourant l'appareil de traitement d'informations (10),
une unité de calcul (44) qui calcule un motif caractéristique sur la base des données environnementales acquises par l'unité d'acquisition (41, 42, 43),
une unité de stockage (45) qui stocke le motif caractéristique calculé par l'unité de calcul (44) ;
une unité de comparaison (35) qui compare le motif caractéristique actuellement calculé par l'unité de calcul (44) avec le motif caractéristique précédemment calculé par l'unité de calcul (44) et stocké dans l'unité de stockage (45), et
une unité de notification (36) qui notifie qu'un emplacement d'installation de l'appareil de traitement d'informations (10) a changé dans un cas où le motif caractéristique actuellement calculé par l'unité de calcul (44) et le motif caractéristique stocké dans l'unité de stockage (45) comparés par l'unité de comparaison (35) sont différents l'un de l'autre.

3. Système selon la revendication 1 ou 2,
dans lequel l'unité de calcul (44) calcule le motif caractéristique en effectuant un processus de conversion prédéterminé sur les données environnementales acquises pendant une période prédéterminée.

4. Système selon l'une quelconque des revendications 1 à 3,
dans lequel l'unité de stockage (45) stocke le motif caractéristique calculé par l'unité de calcul (44) en association avec des informations liées au temps.

5. Système selon la revendication 4,
dans lequel l'unité de stockage (45) stocke le motif caractéristique calculé par l'unité de calcul (44) pour une combinaison d'au moins un ou plusieurs jours, d'une heure et d'un jour de la semaine.

6. Système selon l'une quelconque des revendications 1 à 5,
dans lequel l'unité d'acquisition (41, 42, 43) comprend au moins un capteur de pression atmosphérique (42), un capteur de son (43), un capteur d'accélération (41), un capteur de température, un capteur d'humidité, un capteur de luminance, et un capteur magnétique, et
les données environnementales comprennent au moins l'une des données de pression atmosphérique, des données audio, des données d'accélération, des données de température, des données d'humidité, des données de luminance et des données magnétiques.

7. Procédé comprenant :
dans un appareil de traitement d'informations, les étapes consistant à mesurer des informations environnementales concernant un environnement entourant l'appareil de traitement d'informations ;
mesurer des informations environnementales sur un dispositif externe ou sur un dispositif associé au dispositif externe, et recevoir (S101 ; S201) les informations environnementales, mesurées sur le dispositif externe ou sur le dispositif associé au dispositif externe, sur l'appareil de traitement d'informations en réponse à la réception d'une demande de traitement à partir du dispositif externe ;
au niveau de l'appareil de traitement d'informations, comparer (S102 ; 5203) les informations environnementales, mesurées au niveau de l'appareil de traitement d'informations, avec les informations environnementales reçues ; et
au niveau de l'appareil de traitement d'informations, exécuter (S104 ; 5205) un processus sur la base de la demande de traitement reçue dans un cas où les informations environnementales mesurées au niveau de l'appareil de traitement d'informations et les informations environnementales reçues sont déterminées comme étant mesurées dans le même environnement en conséquence de la comparaison, dans lequel
les informations environnementales sont un motif caractéristique obtenu sur la base de données environnementales, et
le procédé comprend en outre, au niveau de l'appareil de traitement d'informations, les étapes consistant à
acquérir des données environnementales concernant un environnement entourant l'appareil de traitement d'informations,
calculer un motif caractéristique sur la base des données environnementales acquises,
stocker le motif caractéristique calculé,
comparer le motif caractéristique stocké avec le motif caractéristique reçu, et
exécuter un processus basé sur la demande de traitement reçue dans un cas où un taux de correspondance entre le motif caractéristique stocké et le motif caractéristique reçu est égal ou supérieur à un seuil prédéterminé.
